# EUROPEAN PATENT SPECIFICATION

(11) **EP 2 752 179 B1**
(45) Date of publication and mention of the grant of the patent: **10.08.2016**
(21) Application number: 12826987.5
(22) Date of filing: 20.08.2012
(51) Int. Cl.: A61G 5/02

(54) **WHEELCHAIR PROVIDED WITH FEET**
ROLLSTUHL MIT FÜSSEN
CHAISE ROULANTE POURVUE DE PIEDS

(30) Priority: 29.08.2011 JP 2011185522
(43) Date of publication of application: 09.07.2014
(73) Proprietor: Niigata University, Niigata 950-2181 (JP)
(72) Inventor: OKADA, Tokuji, Niigata-shi Niigata 950-2181 (JP)
(74) Representative: MERH-IP Matias Erny Reichl Hoffmann Patentanwälte PartG mbB
(86) International application number: PCT/JP2012/070972
(87) International publication number: WO 2013/031566

(56) References cited:
- FR-A- 498 616
- JP-A- S58 167 263
- JP-A- 2010 264 923
- US-A- 2 664 962

## Description

### Technical Field

The present invention relates to a wheelchair provided with feet for improving mobility on slippery road surfaces, soft ground surfaces, or rubble-strewn road surfaces.

### Background Art

Wheelchair wheels are structured so that wheels may be freely rotatable in forward and backward directions. However, it could be very dangerous to use a wheelchair on outdoor slippery roads, e.g. snowy or frozen roads, because a small contact area between a wheel and a surface causes the wheel to easily slip on the surface, preventing the wheelchair from being driven as intended, or causing the vehicle to be unable to make a quick stop before it hits an obstacle. On soft grounds, e.g., sandy or farm roads, wheels are likely to sink into grounds, placing a heavy burden on a user who needs to roll hard to drive the wheels. Moreover, the maximum height of an obstacle that wheelchairs can override is only about 20% of the large wheel outer radius.

Conventionally, to address these problems on slippery roads, there have been taken countermeasures such as putting chains, mounting spikes, or providing treads onto the wheels. However, putting chains has been disadvantageous in that it is troublesome to put them on and off the wheels. Mounting spikes or providing treads, also, has been disadvantageous in that the wheels require a specialized design.

Also, a four-wheeled wheelchair provided with feet on wheels has been proposed for an enhanced mobility on an irregular ground surface, e.g. a soft road surface, (patent document 1). However, the wheelchair has a problem that the feet thereof work effectively only when all of the four wheels are of the same size and that when the wheels include free wheels, like a hand- or foot-driven wheelchair, the resultant insufficient power prevents a driver from steering the free wheels into an intended direction.

Further, a vehicle, having extensible/contractible arc-shaped rods, has been proposed (patent document 2), but there has been a problem that the direction of the rods, serving as the feet, has to be limited to either clockwise or anticlockwise direction due to its structural limitation.

A vehicle having feet, in which the feet are formed such that one end(s) of links connecting two slightly spaced-apart wheels of the same size may serve as the feet (non-patent document 1), has a problem that feet are unable to be directed in a desired direction.

Vehicles, having a wheel mechanism to allow unidirectional claws to be protruded from outer rims of wheels by the rotation around an eccentric shaft (non-patent documents 2-3), have been proposed, but have problems that the claws are restricted to downwardly-directing ones with respect to the body of the vehicle.

Moreover, a vehicle having increased contact areas, due to spiders mounted on the top of spokes, has been proposed (patent document 3). However, it has a problem that the vehicle needs a large amount of a driving power, and that the feet can be directed only within a limited narrow range.
A tractor drive wheel for use in agriculture or transport in various terrains is for instance known from FR 498 616 A.
Said wheel comprises on an outer circumferential surface thereof spades or feet which are all together rotated in a certain relation with respect to each other while the tractor wheel is rotated.

### Prior Art Documents

### Patent documents

Patent document 1: Japanese Unexamined Patent Application Publication No. 2010-264923
Patent document 2: Japanese Unexamined Patent Application Publication No. 60-148780
Patent document 3: U.S. Pat. No. 2,664,962

### Non Patent Documents

Non-patent document 1: "A Study of the Wheel-Feet Mechanism for Stair Climbing," by Kan Taguchi and Hisataka Satoh, Advanced Robotics, Vol. 15 No. 1, pp. 118-123, 1997.
Non-patent document 2: "Kikai Undo Kikou", Ghihodo Shuppan, page 18, line 61-62, 1990, by Ashiba, Seizaburo,
Non-patent document 3: "Concept and Mechanism of Robot Vehicle Using Variable Configuration Segmented Wheels," by Iwamoto, Taro and Shibuya, Koji, Transactions of the Japan Society of Mechanical Engineers, Ser. C, 71(701), 171-177 2005

### Disclosure of the Invention

### Problems to be Solved by the Invention

In view of the foregoing problems, it is an object of the present invention to provide a wheelchair provided with feet capable of turning feet to a wide range of direction by a simple operation, thus making it possible to move freely, coping with slippery road surfaces, soft surfaces, and obstacles.

### Means for Solving the Problems

The aforesaid problem is solved with a wheel chair as find in claim 1. Further, referred embodiments are defined in the dependent claims.

A first aspect of the present invention is a wheelchair as claimed in claim 1

A second aspect of the present invention is a wheelchair based on the first aspect, characterized in that the wheelchair is configured to transmit, by a worm wheel, a rotating force of the rotating handle to the pulley or sprocket pivotally supported by the large wheel axle.

A third aspect of the present invention is a wheelchair based on the first aspect, characterized in that the wheelchair is configured to transmit, by a planetary gearing, the rotating force of the rotating handle to the pulley or sprocket pivotally supported by the large wheel axle.

A fourth aspect of the present invention is a wheelchair based on the first aspect, in which the wheelchair comprises pulleys or sprockets each pivotally supported by the large wheels via relay shafts, characterized in that: the wheelchair is configured to transmit a driving force, by the wire, from the pulley or sprocket pivotally supported by the large wheel axle to the plurality of pulleys or sprockets pivotally supported by the rotating shafts via the pulleys or sprockets pivotally supported by the relay shafts; and the wheelchair is configured so that an outer radius of each of the plurality of pulleys or sprockets each pivotally supported by the rotating shaft is smaller than that of the pulley or sprocket pivotally supported by the large wheel axle.

A fifth aspect of the present invention is based on the first aspect, characterized in that the wheelchair is configured so that the rotating handle enables control of the angular variations of the interlocked pulleys or sprockets pivotally supported by the left and right large wheel axles.

A sixth aspect of the present invention is based on the first aspect, characterized in that the wheelchair comprises casters and skirts provided on right and left sides of the bottom part of the wheelchair body, the skirts sloping down in the direction from the large wheel axle toward the casters.

### Effects of the invention

A wheelchair provided with feet according to a first aspect of the invention provides one that makes it possible to change the direction of feet to a wide range of direction irrespective of the rotational angle of the large wheels, by a simple rotating operation of a rotating handle, thus making it possible to move freely, coping with slippery road surfaces, soft surfaces, and obstacles.

A wheelchair provided with feet according to a second aspect of the invention is capable of changing the direction of feet with a small amount of power since the rotating force of the rotating handle is transmitted via the worm wheel. The directions of feet are maintained even if the hands of the users are detached therefrom thanks to a self-locking mechanism.

A wheelchair provided with feet according to a third aspect of the invention is capable of changing the direction of feet with small power since the rotating force of the rotating handle is transmitted via the planetary gearing. The directions of feet are maintained even if the hands of the users are detached therefrom thanks to the self-locking mechanism.

A wheelchair provided with feet according to a fourth aspect of the invention can be improved to enable the pursuit of trimmed-down wheels by downsizing the outer radius of the plurality of pulleys or sprockets pivotally supported by the rotating shafts.

A wheelchair provided with feet according to a fifth aspect of the invention is capable of changing the direction of feet with single handed operation.

A wheelchair provided with feet according to a sixth aspect of the invention enables one to make easy step climbing.

### Brief Description of the Drawings

FIG. 1 is an explanatory diagram of the wheelchair provided with feet, showing an operating principle of a first mechanism.
FIG. 2 is an explanatory diagram of the wheelchair provided with feet, showing an operating principle of a second mechanism.
FIG. 3 is an explanatory diagram of the wheelchair provided with feet, showing a feet directing mechanism using a wire.
FIG. 4 is an explanatory diagram of the wheelchair provided with feet, showing a feet directing mechanism by a belt.
FIG. 5 is a partial front elevation view (Left) and side view (Right) of the wheelchair in a first embodiment of the present invention.
FIG. 6 is a partial front elevation view (Left) and side view (Right) of the wheelchair in the first embodiment when driving the wheelchair.
FIG. 7 is a partial front elevation view (Left) and side view (Right) of the wheelchair in the first embodiment when the wheelchair is in anti-skid mode.
FIG. 8 is a partial front elevation view (Left) and side view (Right) of the wheelchair in the first embodiment when overriding bumps.
FIG. 9 is a partial front elevation view (Left) and side view (Right) of the wheelchair in a second embodiment in a case where the wheelchair has eight feet.
FIG. 10 is a partial front elevation view (Left) and side view (Right) of the wheelchair of a third embodiment.
FIG. 11 is an explanatory diagram of the planetary gearing of the wheelchair of a fourth embodiment.
FIG. 12 is a partial front elevation view (Left) and side view (Right) of the wheelchair of the fourth embodiment.
FIG. 13 is a partial front elevation view (Left) and side view (Right) of the wheelchair of a fifth embodiment.
FIG. 14 is a side view of the wheelchair of a sixth embodiment..

### Best Mode for Carrying Out the Invention

The present invention has achieved by noting a fact that wheelchairs, which are widely used in daily life, are limited in its range of mobility in outdoors where the wheelchairs are under the influence of road surface conditions, and that no matter how powerful the wheels might be driven by a healthy handed user, there always would be a limit for the wheelchair to be driven, coping with slippery road surfaces, soft surfaces and obstacles. The wheelchair of the present invention is equipped with short feet on the perimeter of the large wheel at regular intervals, in which the handle is rotated by the users themselves so as to make it possible to change the direction of every feet in any orientation specified. The users protrude a plurality of feet in any direction on the perimeter of the large wheel by a simple handle operation, which in turn enables traveling impervious to various road surface conditions. Worm and worm wheel mechanism, or planetary gearing, are adapted for changing the direction of feet in an adjustable way with small hand driven power.

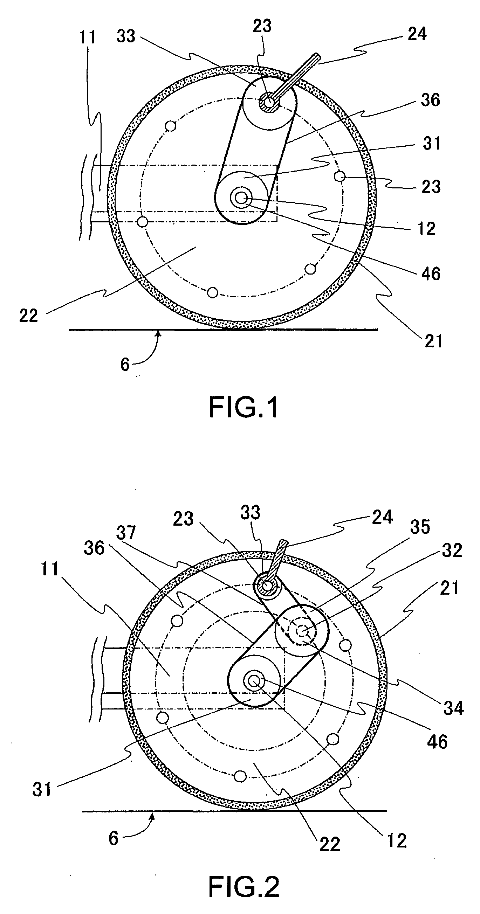

Note that, from the left and right symmetry, only a half side of the large wheels will be basically illustrated hereinafter. In FIG. 1, in which an operating principle of a first mechanism is illustrated, a numeral 11 denotes a wheelchair body, the wheelchair body 11 being provided with large wheel axle 12 pivotally supporting the large wheel. A numeral 21 is a perimeter of the large wheel, and the perimeter of the large wheel 21 is pivotally supported by the large wheel axle 12 via a base 22. Note that perimeter 21 of the large wheel may be supported by large wheel axle 12 via spokes, instead of base 22. On base 22 is provided with six rotating shafts 23, in which each of the rotating shafts 23 pivotally supports foot 24. Note that only a single foot 24 is shown in the figure, and other feet are omitted for simplicity. However, the number of feet can be arbitrary set to be greater than or equal to three. Also, a pulley or sprocket 31 (hereinafter referred to as pulley 31) is pivotally supported by large wheel axle 12. Pulleys or sprockets 33 (hereinafter referred to as pulleys 33), having the same radius as pulley 31, is pivotally supported by rotating shafts 23 via a radial bearing 46, the pulleys 33 being fixed upon feet 24. Pulley 31 and pulleys 33 are connected with power transmitting means such as wires, ropes, chains, or belts (hereinafter referred to as wire 36) and are configured to transmit a driving force from pulley 31 to pulley 33 therethrough. Note that a numeral 6 is designated for a road surface.

It is noted that feet 24, which are fixed to rotating shafts 23, maintain itself in the same direction, irrespective of the rotation of a large wheel rim 21, since pulley 31 and pulleys 33 are in the same size and the pulley 31 is fixed to wheelchair body 11. Further, if an angle of pulley 31, with respect to wheelchair body 11, is forced to be changed, the direction of feet 24 is changed in accordance therewith.

In short, the present invention is based on a novel idea being that the operation of feet 24 get independent of the rotation of large wheel 2, while an amount of rotation of pulley 31 that is able to rotate on large wheel axle 12, is equally shared with that of pulleys 33 to which feet 24 are attached, maintaining a rotational angle of pulley 24 identical with that of pulley 33. Therefore, the directions of feet 24 are configured to be unchanged even if large wheel 2 may be rotated, as long as pulley 31 attached upon large wheel axle 12 does not rotate. In this configuration, the direction of feet 24 can be controlled by the rotation of pulley 31, irrespective of the rotational angle of large wheel 2.

FIG. 2 shows an operating principle of a second mechanism. Hereinafter, elements, sharing the same structure as those shown in FIG. 1, are designated by the same reference numbers as FIG. 1 and will not be explained. This mechanism is characterized in that between large wheel axle 12 and rotating shafts 23 are provided with relay shafts 32. Pulleys 34, and pulley or sprockets 35 (hereinafter, referred to as pulleys 35) are pivotally supported by the relay shaft 32, and pulleys or sprockets 33 are pivotally supported by rotating shafts 23. Moreover, pulleys 35 are fixed to pulley 34. Pulley 33 and pulleys 34 are connected with each other via power transmitting means such as wires, ropes, chains, or belts (hereinafter, referred to as wire 37) and are configured to transmit a driving force from pulley 34 to pulleys 33 therethrough. As FIG. 2 illustrates, pulley 31 and pulley 35 are in the same size, and pulleys 34 and pulley 33 are, also, in the same size, so that rotational direction and speed of pulley 31, and those of pulley 33 get identical. Note that these sizes are properly resizable as long as rotational direction and speed of pulley 31, and those of pulley 33 are equal with each other. Pulleys 31, 35 and pulleys 34, 33, therefore, do not necessary need to be in the same size.

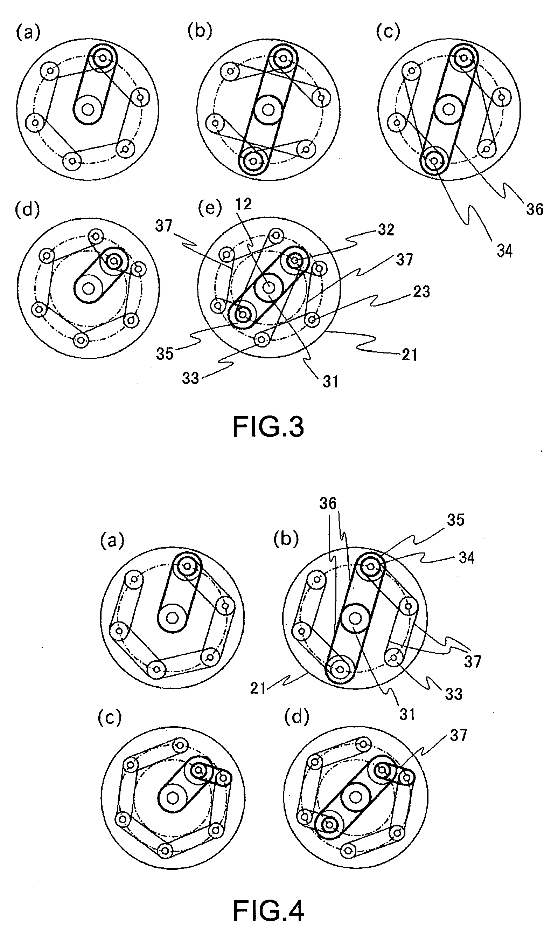

FIG. 3 illustrates an operating principal of the wheelchair having string wire as a mean of transmitting a driving force. Figs. (a), (b) and (c) show the ways of hooking wires based on the first mechanism, while Figs. (d) and (e) show the ways of hooking wires based on the second mechanism. One can provide any number of feet sets when using wires, whereby one foot set comprises , for example, rotating shafts 23, pulleys 33 and feet (not shown in FIG. 3), since the wires are allowed to be twisted or crossed. Note that the numbers of wire turns in the pulleys are preferably large while the numbers of pulley steps are preferably small in order for the rotational angle of the feet to be reliably transmitted. The six feet are controllably directed to have the same rotational angle with pulley 31 by a single wire (Figs. (a) to (d)) or by double wires (Figs. (b), (c), and (e)). Meanwhile, one idler pulley is needed in each wire to take up the slack of the wire, but the method of installing the pulley is publicly known and thus omitted here. Winding patterns (a) and (d) are preferable to make the wire shorter and to have large winding angle to the pulley.

Furthermore, FIG. 4 illustrates an operating principal of the invention when using a belt, where twists or crossing of the belt are not allowed, for wires 36 and 37. Figs. (a) and (b) are belt hooking methods based on the first mechanism, while Figs. (c) and (d) are those on the second mechanism. Winding angles of the belts to the sprockets are 180 degree in both of the methods. Wires are more preferable to belts in order to make the length shorter and to have large winding angle.

Please note that one can make use of multicore stranded wires for wires, whereas for belts, V-belts, toothed belts, double sided timing belts or chains are available.

The invention is versatile to general electrically-driven wheelchairs if driving wheels with no steering capability (wheels which do not change the direction of the driving axle) are regarded as the large wheels of the present invention.

Exemplary embodiments of the wheelchair provided with feet of the present invention will now be described with reference to the drawing. Note that elements having a same structure are designated by the reference numbers which are same as the figure explained before and will not be explained.

### First Embodiment

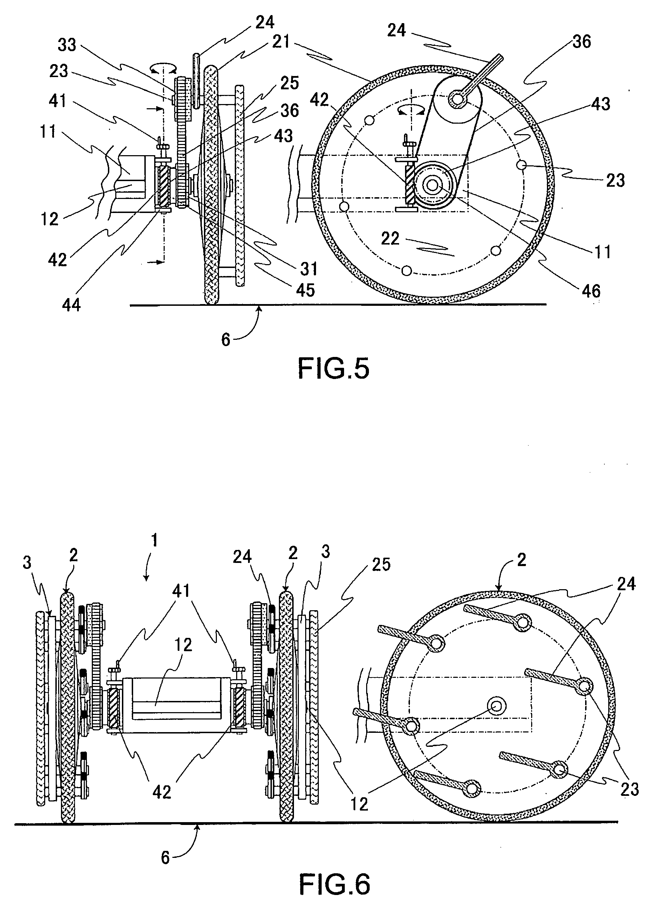

The present embodiment is an application of the warm and worm wheel to the first mechanism. In Figs. 5 to 8, showing the wheelchair of the present embodiment, numeral 1 denotes a wheelchair, numeral 2 a large wheel, numeral 3 a feet rotating means for rotating feet 24 and numeral 4 a feet directing means for directing feet 24, respectively. Numeral 25 denotes a hand rim by which the user rotates wheel 2. Note that, in FIG. 5, only a single foot 24 is illustrated and the other feet are not shown. The feet rotating means 3 is not shown either.

A numeral 41 denotes a rotating handle and the handle 41 is fixed to a worm 42. The worm 42 connects worm wheel 43 and the worm is pivotally supported by worm fixing panels 44 provided on the wheelchair body 11 in a rotation-free manner, where the rotating shaft of worm 42 is orthogonal to the rotating shaft of the worm wheel. Worm wheel 43 is fixed to the pulley 31 via a rotational angle transmitting means 45. Note that the shaft of worm 42 in the figure is vertically provided, but the shaft may be inclined to be easily operable to make various modifications and is not limited to the present embodiment.

Pulley 31 is rotatable on large wheel axle 12 via bearings 46. Worm 42, which is pivotally fixed to worm fixing panels 44, rotates by the rotating operation of the rotating handle 41. Moreover, rotation of worm 42 induces the rotation of worm wheel 43, which in turn transmits the rotation of worm wheel 43, via rotational transmitting means 45, pulley 31, wire 36, and pulley 33, to feet 24. Therefore, the direction of feet 24 can be changed by the rotating operation of rotating handle 41. Moreover, a large yet slow rotating force can be transmitted to pulleys 33 from speedy-and-less-powerful gearing of handle 41, in combination of worm 42 with worm wheel 43. Generally, a rotation power, which is 50-60 times larger than that of rotating handle 42, is to be transmitted to pulley 31.

Conversely speaking, a large rotation power needs to be applied to pulley 31 in order to rotate rotating handle 41 by the rotating force of pulleys 33. Hence, one can expect a self-locking effect, by which the hands can be kept detached from rotating handle 41, even when large amount of loads are to be applied on feet 24. The wheelchair users, therefore, are able to work themselves on normal hand-driven operation with its rotating handle 41 untouched except when feet 24 is directed.

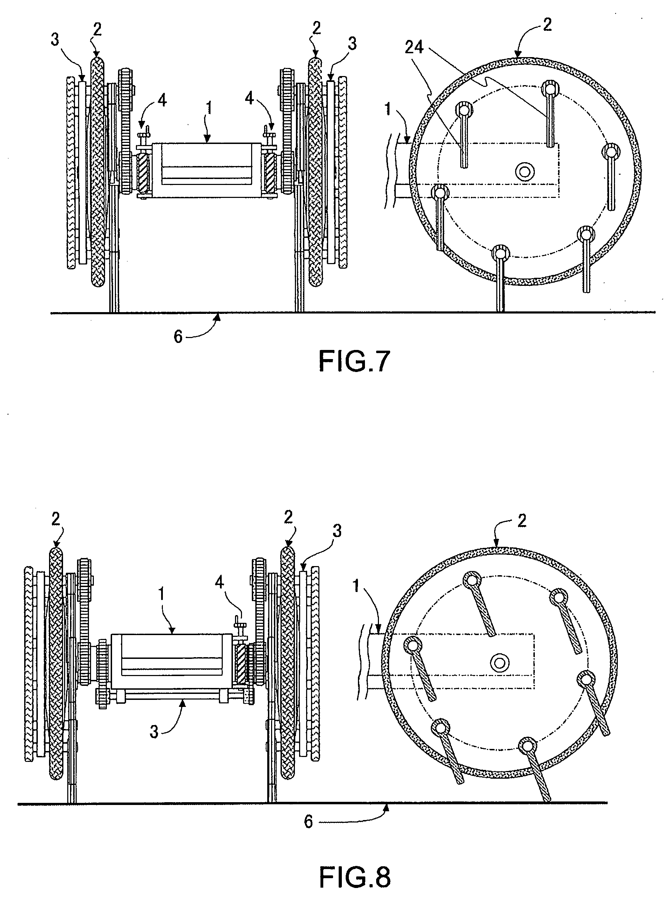

FIG. 6 illustrates the wheelchair in a driving mode. FIG. 7 illustrates the wheelchair in an anti-skid mode. FIG. 8 illustrates the wheelchair in a step climbing mode. Furthermore, FIG. 8 shows an embodiment in which feet 24, on the left-and-right large wheels 2, are interlocked to control the direction of the wheelchair by means of one rotating handle 41.

Modes of feet 24 can be set by the operation of rotating handle 41 based on slipperiness of the road surface, step existence, or road softness. In a case where, for example, the wheelchair is moving rightward with reference to FIG. 6, feet 24 are directed obliquely upward to the back so as to be in no contact therewith, providing normal utilization mode. On the other hand, on slippery road surfaces, e.g. frozen or snowy road surfaces, feet 24 are directed directly downward, providing feet standing utilization mode as shown in FIG. 7. Coming across with an obstacle, e.g. a bump, feet 24 are directed diagonally down forward or perpendicularly forward, as illustrated in FIG. 8, providing a utilization mode for overriding or stepping over bumps. Moreover, when coming across soft grounds, e.g. sands or farm roads, feet 24 are directed diagonally down backward, providing a utilization mode for preventing wheels from being stuck. Further in a case where the directions of feet, on the right wheel and left wheel, are allowed to be directed independently from each other, as illustrated in FIGs. 6 and 7, the wheelchair can be traversed leftward to the downhill by protruding right wheel feet downward and left wheel feet upward, while when traversing rightward, right wheel feet are protruded upward and left wheel feet downward. The wheelchair of the present embodiment, therefore, provides mobility capable of coping with various road surfaces in outdoors with no assistance required from helpers.

To summarize, the wheelchair of the present embodiment comprises a wheelchair body 11; large wheels 2 pivotally supported by the wheelchair body 11 via a large wheel axle 12; a plurality of feet 24 pivotally supported by the large wheels 2 via rotating shafts 23; a pulley 31 pivotally supported by the large wheel axle 12; a plurality of pulleys 33, which are pivotally supported by the rotating shafts 23, and to which the feet 24 are secured; a wire 36, as a power transmitting means, for transmitting a driving force to the plurality of pulleys 33 pivotally supported by the rotating shafts 23 from the pulley 31 pivotally supported by the large wheel axle 12; and a rotating handle 41, characterized in that: the plurality of pulleys 33 pivotally supported by the rotating shafts 23 are linked with the pulley 31 pivotally supported by the large wheel axle 12 by the wire 36 so that the plurality of pulleys 33 have the same angular variation as the pulley 31 pivotally supported by the large wheel axle 12; and the wheelchair is configured so that the angular variation of the pulley 31 can be controlled by rotating the rotating handle 41. The wheelchair provides one which makes it possible to get audacious mobility impervious to slippery road surfaces, soft grounds, and obstacles by directing feet 24 to a wide range of direction by an easy rotating operation of rotating handle 41.

Further, the directions of feet 24 can be directed with small power since the wheelchair is configured to transmit, via worm wheel 43, a rotating force of rotating handle 41 to pulley 31 pivotally supported by large wheel axle 12.

Furthermore, as illustrated in FIG. 8, every feet 24 are to be controlled with single handed operation in a case where a single handle 41 is configured to control the angular variations of the interlocked pulleys 31 pivotally supported by the left and right large wheel axles.

### Second Embodiment

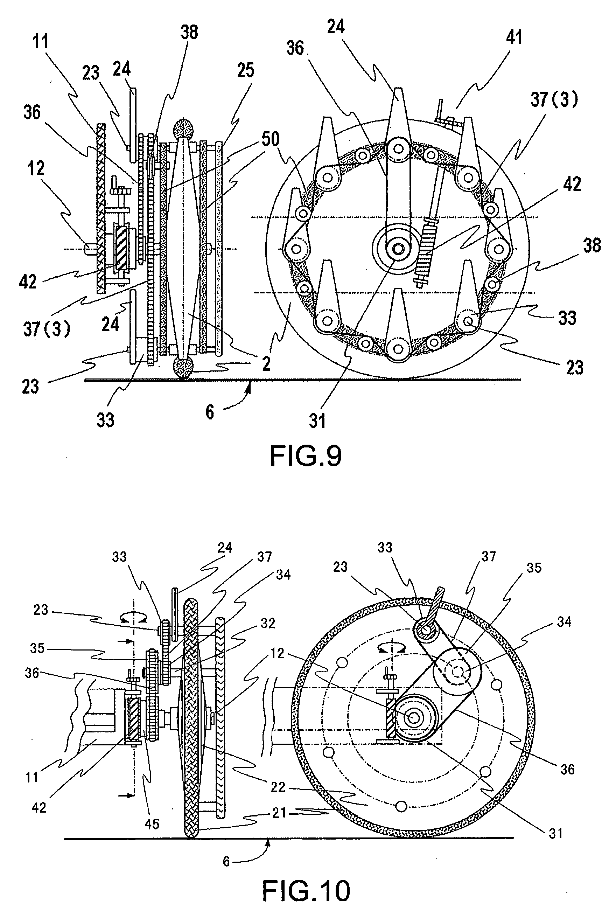

The present embodiment describes a creative way of hooking wire 37 so as to make the wire as short as possible in a case where each of the wheels has eight feet. In the present embodiment, guiding pulleys 38 are arranged alternately concentric with pulleys 33 linked to feet 24, as illustrated in FIG. 9. In short, pulleys 33 and guiding pulleys 38 are arranged alternately concentric with each other on the circumference near to the rim of large wheel 2. The number of guiding pulleys 38 is equal to that of pulleys 33, and the adjacent pulleys 33 and 38 are substantially equally-spaced. Further, a power transmitting wire 37 is alternately guided to pulley 33 and pulley 38 in a in a zig-zag manner. Furthermore, on the rim of large wheel 2, feet shaft fixing rings 50 are fixed for keeping rotating shaft 23 parallel to large wheel axle 12. The description of the other elements will not be explained hereinafter because the elements are already described above.

In a configuration shown in FIG. 9, winding angles of wire 37 to pulley 33 are secured by being guided alternately to pulley 33 and 38. As the result, the driving force of wire 37 is reliably transmitted to pulley 33. Moreover, a tension of wire 37 can be finely regulated by moving the position of pulleys 38 to the circumferential direction.

### Third Embodiment

The present embodiment is an application of the worm and worm wheel to the second mechanism. FIG. 10 illustrates the configuration thereof. Note that feet rotating means 3 is not shown either in the same manner as FIG. 5.

In this embodiment of the wheelchair provided with feet, the wheelchair comprises pulleys 35 and 34 each pivotally supported by the large wheel 2 via relay shafts 32, characterized in that: the wheelchair is configured to transmit a driving force, by the wires 36 and 37 as a power transmitting means, from the pulley 31 pivotally supported by the large wheel axle 12 to the plurality of pulleys 33 pivotally supported by the rotating shafts 23 via the pulleys 35 and 34 pivotally supported by the relay shafts 32. The wheelchair is configured so that an outer radius of each of the plurality of pulleys 33 each pivotally supported by the rotating shaft 23 is smaller than that of the pulley 31 pivotally supported by the large wheel axle 12. The embodiment is suitable for the pursuit of trimmed-down wheels by downsizing the outer radius of the pulleys 33 pivotally supported by the plurality of rotating shafts 23.

Detailed description of the respective elements will not be explained in detail because the elements are already described above. Note that feet shaft fixing rings 50, similar to those described in the second embodiment, may be disposed for keeping relay shafts 32 parallel to large wheel axle 12. In the present embodiment, the feet on right and left wheels can be interlocked to control the direction by means of one rotating handle 41, in the same manner as the first and second embodiments.

### Forth Embodiment

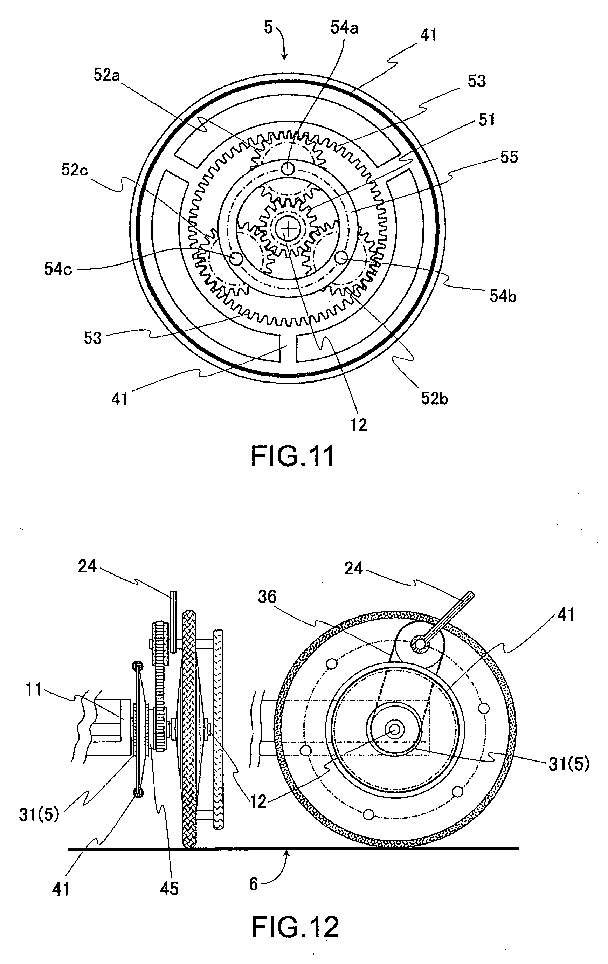

The present embodiment describes an application of the planetary gearing, instead of using worm and worm wheel, to the first mechanism. In FIG. 11, illustrating a planetary gearing of the present embodiment of the wheelchair provided with feet, and FIG. 12, illustrating the present embodiment of the wheelchair provided with feet, numeral 5 denotes a planetary gearing. Note that only one foot 24 is illustrated in FIG. 12, and feet rotating means 3 and other parts are not shown either for easy viewing. Planetary gearing 5 comprises a sun gear 51, planetary gears 52a-52c, an inner gear 53, planetary gear shafts 54a-54c, and a planet gear carrier 55. Sun gear 51 is fixed to large wheel axle 12 with adhesive treatment, such as keys or serration, provided thereupon. Furthermore, each planetary gears 52a-52c is pivotally supported by each of planetary shafts 54a-54c, which is fixed to planet gear carrier 55, in a rotation-free manner. Sun gear 51 is interlocked with planetary gears 52a-52c, and gears 52a-52c are interlocked with inner gear 53 one another. Also, rotating handle 41 is integrally fixed to inner gear 53. Rotational plane of rotating handle 41 is identical or perpendicular to that of inner gear 53 and is orthogonal to large wheel axle 12.

With regard to this mechanism, rotation of handle 41 induces the rotation of inner gear 53 and planet gear 52a-52c, which in turn induces the rotation of planet gear carrier 55. The rotational angle thereof is directly transmitted to pulley 31 by rotational angle transmitting means 45. The rotation force thereof is transmitted to pulley 31, with its force (Ns+ Ni) /Ni times larger, where Ns and Ni denote the teeth number of sun gear 51 and that of inner gear 53 respectively. Therefore, powerful rotation of pulley 31 is to be achieved with less power applied to rotating handle 41. Further in this embodiment, feet 24 on the left and right large wheels 2 can be interlocked to control the direction by means of one rotating handle 41, in the same manner as the embodiments 1 to 3.

To summarize, the wheelchair of the embodiment is configured to transmit a rotating force of the rotating handle 41, via planetary gearing 5, to pulley 31 pivotally supported by the large wheel axle 12, so that the wheelchair is capable of controlling the directions of feet 24 with small power.

### Fifth Embodiment

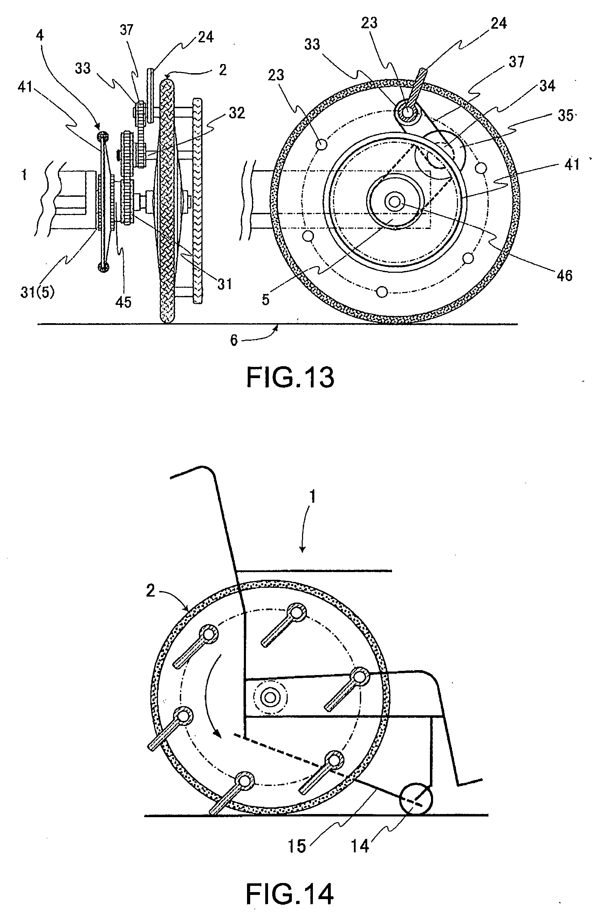

This embodiment illustrates an application of the warm and worm wheel to the second mechanism. The configuration of the embodiment is illustrated in FIG. 13 but the description of each element will not be explained because the elements are already be explained. In the present embodiment, feet 24 on the left and right large wheels 2 can be also interlocked to control the direction by means of one rotating handle 41, in the same manner as the embodiments 1 to 4.

### Sixth Embodiment

This embodiment illustrates a modification suited for step climbing. When being utilized for step climbing, the wheelchair starts to climb from the side of the large wheel, but casters, on the other side of the wheel, are blocked by the step wall to be driven, making the wheelchair difficult to be moved around. The wheelchair of the embodiment comprises casters 14 and skirts 15, which are made out of long thin plates, skirts 15 being provided on right and left sides of the bottom part of the wheelchair body, the skirts sloping down in the direction from the large wheel axle 12 toward the casters 14 as illustrated in FIG. 14. The wheelchair can be driven with its casters 14 overriding its treads, thereby enabling rolling movement similar to that on smooth grounds. When climbing down, on the other hand, casters are the first to lead the wheelchair, while skirts 15 slide to be in contact with the edge of the steps, supporting the load of the wheelchair to prevent the falling. In either case, it is important for the large wheels to be faced uphill when climbing up and down. Note that skirts 15 can be modifiability configured to be inclined so that one end of skirts 15 get vertically movable along with supporting rods, the rods designed for fixing casters 14 to wheelchair body 11.

The wheelchair of the embodiment comprises casters 14 and skirts provided on right and left sides of the bottom part of the wheelchair body, the skirts sloping down in the direction from the large wheel axle 12 toward the casters 14, thereby making step (down) climbing easy.

### Description of the Reference Numeral

- 2: large wheel
- 5: planetary gearing
- 11: wheelchair body
- 12: large wheel axle
- 14: caster
- 15: skirt
- 23: rotating shaft
- 24: feet
- 31, 33, 34, 35: pulley
- 32: relay shaft
- 36, 37: wire
- 41: rotating handle
- 43: worm wheel
- 50: feet shaft fixing ring

## Claims

1. A wheelchair provided with feet comprising:
a wheelchair body (11);
large wheels (2) pivotally supported by the wheelchair body (11) via a large wheel axle (12);
a plurality of feet (24) pivotally supported by the large wheels (2) via rotating shafts (23);
a power transmitting means (36); and
a rotating handle (41),
and a plurality of pulleys or sprockets (33) pivotally supported by the rotating shafts (23) with the feet (24) secured thereto;
**characterized by**
a single pulley or sprocket (31) pivotally supported by the large wheel axle (12); wherein the wheelchair is configured so that the power transmitting means (36) transmits a driving force from the single pulley or sprocket (31) pivotally supported by the large wheel axle (12) to the plurality of pulleys or sprockets (33) pivotally supported by the rotating shafts (23);
the plurality of pulleys or sprockets (33) pivotally supported by the rotating shafts (23) are linked with the pulley or sprocket (31) pivotally supported by the large wheel axle (12) by the power transmitting means (36) so that the plurality of pulleys or sprockets (33) have the same angular change as the pulley or sprocket (31) pivotally supported by the large wheel axle (12); and
that the angular change of the pulley or sprocket (31) can be controlled by rotating the rotating handle (41) irrespective of the rotational angle of the large wheels (2).

2. The wheelchair provided with feet according to claim 1, **characterized in that** the wheelchair is configured to transmit a rotating force of the rotating handle (41) to the single pulley or sprocket (31) pivotally supported by the large wheel axle (12) via a worm wheel (43).

3. The wheelchair provided with feet according to claim 1, **characterized in that** the wheelchair is configured to transmit a rotating force of the rotating handle (41) to the single pulley or sprocket (31) pivotally supported by the large wheel axle (12) via a planetary gearing (5).

4. The wheelchair provided with feet according to claim 3, **characterized in that** the planetary gearing (5) comprises:
a sun gear (51) fixed to the large wheel axle (12);
planetary gears (52a), (52b), (52c) engageable with the sun gear (51);
an inner gear (53) engageable with the planetary gears (52a), (52b), (52c);
planetary shafts (54a), (54b), (54c) pivotally supporting the planetary gears (52a), (52b), (52c); and
a planet gear carrier (55) with the planetary shafts (54a), (54b), (54c) fixed thereon and that
the rotating handle (41) is integrally fixed to the inner gear (53) so as to transfer a rotational angle of the planet gear carrier (55) directly to the single pulley or sprocket (31) pivotally supported by the large wheel axle (12).

5. The wheelchair provided with feet according to claim 1, **characterized in that** the wheelchair further comprises pulleys or sprockets (35) each pivotally supported by the large wheel (2) via relay shafts (32) to transmit a driving force, by the power transmitting means (36) and (37), from the single pulley or sprocket (31) pivotally supported by the large wheel axle (12) to the plurality of pulleys or sprockets (33) pivotally supported by the rotating shafts (23) via the pulleys or sprockets (35) and (34) pivotally supported by the relay shafts (32); and that an outer radius of each of the plurality of pulleys or sprockets (33) each pivotally supported by the rotating shaft (23) is smaller than that of the single pulley or sprocket (31) pivotally supported by the large wheel axle (12).

6. The wheelchair provided with feet according to claim 1, **characterized in that** the wheelchair is configured so that the rotating handle enables control of the angular changes of the interlocked single pulleys or sprockets (31) pivotally supported by the left and right large wheel axles.

7. The wheelchair provided with feet according to claim 1, **characterized in that** the wheelchair further comprises casters (14) and skirts (15) provided on right and left sides of a bottom part of the wheelchair body, the skirts (15) sloping down in the direction from the large wheel axle (12) toward the casters (14).

8. The wheelchair provided with feet according to claim 1, **characterized in that** on one side of the plurality of feet (24) is provided the large wheel (2) while on the other side thereof is provided the wheelchair body (11).

## Patentansprüche

1. Rollstuhl, der mit Füßen versehen ist, wobei der Rollstuhl umfasst:
einen Rollstuhlaufbau (11);
große Räder (2), die über eine Achse (12) der großen Räder durch den Rollstuhlaufbau (11) drehbar gestützt sind;
mehrere Füße (24), die über Drehwellen (23) durch die großen Räder (2) drehbar gestützt sind;
ein Kraftübertragungsmittel (36); und
einen Drehgriff (41),
und mehrere Riemenscheiben oder Kettenräder (33), die durch die Drehwellen (23) mit den daran befestigten Füßen (24) drehbar gestützt sind;
**gekennzeichnet durch**
eine einzelne Riemenscheibe oder ein einzelnes Kettenrad (31), die bzw. das **durch** die Achse (12) der großen Räder drehbar gestützt ist; wobei der Rollstuhl so konfiguriert ist, dass das Kraftübertragungsmittel (36) eine Antriebskraft von der einzelnen Riemenscheibe oder von dem einzelnen Kettenrad (31), die bzw. das **durch** die Achse (12) der großen Räder drehbar gestützt ist, auf die mehreren Riemenscheiben oder Kettenräder (33), die **durch** die Drehwellen (23) drehbar gestützt sind, überträgt;
wobei die mehreren Riemenscheiben oder Kettenräder (33), die durch die Drehwellen (23) drehbar gestützt sind, mit der Riemenscheibe oder mit dem Kettenrad (31), die bzw. das **durch** die Achse (12) der großen Räder drehbar gestützt ist, **durch** das Kraftübertragungsmittel (36) in der Weise gekoppelt sind, dass die mehreren Riemenscheiben oder Kettenräder (33) dieselbe Winkeländerung wie die Riemenscheibe oder das Ketterad (31), die bzw. das **durch** die Achse (12) der großen Räder drehbar gestützt ist, erfahren; und
dass die Winkeländerung der Riemenscheibe oder des Kettenrads (31) unabhängig von dem Drehwinkel der großen Räder (2) **durch** Drehen des Drehgriffs (41) gesteuert werden kann.

2. Rollstuhl, der mit Füßen versehen ist, nach Anspruch 1, **dadurch gekennzeichnet, dass** der Rollstuhl dafür konfiguriert ist, eine Drehkraft des Drehgriffs (41) auf die einzelne Riemenscheibe oder auf das einzelne Kettenrad (31), die bzw. das durch die Achse (12) der großen Räder drehbar gestützt ist, über ein Schneckenrad (43) zu übertragen.

3. Rollstuhl, der mit Füßen versehen ist, nach Anspruch 1, **dadurch gekennzeichnet, dass** der Rollstuhl dafür konfiguriert ist, eine Drehkraft des Drehgriffs (41) auf die Riemenscheibe oder auf das Kettenrad (31), die bzw. das durch die Achse (12) der großen Räder drehbar gestützt ist, über ein Planetengetriebe (5) zu übertragen.

4. Rollstuhl, der mit Füßen versehen ist, nach Anspruch 3, **dadurch gekennzeichnet, dass** das Planetengetriebe (5) umfasst:
ein Sonnenrad (51), das an der Achse (12) der großen Räder befestigt ist;
Planetenräder (52a), (52b), (52c), die mit dem Sonnenrad (51) in Eingriff gebracht werden können;
ein Innenrad (53), das mit den Planetenrädern (52a), (52b), (52c) in Eingriff gebracht werden kann;
Planetenwellen (54a), (54b), (54c), die durch die Planetenräder (52a), (52b), (52c) drehbar gestützt sind; und
einen Planetenradträger (55), an dem die Planetenwellen (54a), (54b), (54c) befestigt sind, und
dass der Drehgriff (41) an dem Innenrad (53) in der Weise einteilig befestigt ist, dass er den Drehwinkel des Planetenradträgers (55) auf die einzelne Riemenscheibe oder auf das einzelne Kettenrad (31), die bzw. das durch die Achse (12) der großen Räder drehbar gestützt ist, direkt überträgt.

5. Rollstuhl, der mit Füßen versehen ist, nach Anspruch 1, **dadurch gekennzeichnet, dass** der Rollstuhl ferner Riemenscheiben oder Kettenräder (35) umfasst, die jeweils über Relaiswellen (32) durch das große Rad (2) drehbar gestützt sind, um eine Antriebskraft durch die Kraftübertragungsmittel (36) und (37) von der einzelnen Riemenscheibe oder von dem einzelnen Kettenrad (31), die bzw. das durch die Achse (12) der großen Räder drehbar gestützt ist, über die Riemenscheiben oder Kettenräder (35) und (34), die durch die Relaiswellen (32) drehbar gestützt sind, auf die mehreren Riemenscheiben oder Kettenräder (33), die durch die Drehwellen (23) drehbar gestützt sind, zu übertragen; und dass ein Außenradius jeder der mehreren Riemenscheiben oder Kettenräder (33), die jeweils durch die Drehwelle (23) drehbar gestützt sind, kleiner als der der einzelnen Riemenscheibe oder des einzelnen Kettenrads (31), die bzw. das durch die Achse (12) der großen Räder drehbar gestützt ist, ist.

6. Rollstuhl, der mit Füßen versehen ist, nach Anspruch 1, **dadurch gekennzeichnet, dass** der Rollstuhl so konfiguriert ist, dass der Drehgriff die Steuerung der Winkeländerungen der verriegelten einzelnen Riemenscheiben oder Kettenräder (31), die durch die Achsen des linken und des rechten großen Rads drehbar gestützt sind, ermöglicht.

7. Rollstuhl, der mit Füßen versehen ist, nach Anspruch 1, **dadurch gekennzeichnet, dass** der Rollstuhl ferner Laufrollen (14) und Blenden (15), die auf der rechten und auf der linken Seite eines unter Teils des Rollstuhlaufbaus vorgesehen sind, umfasst, wobei die Blenden (15) in der Richtung von der Achse (12) der großen Räder in Richtung der Laufrollen (14) nach unten geneigt sind.

8. Rollstuhl, der mit Füßen versehen ist, nach Anspruch 1, **dadurch gekennzeichnet, dass** auf einer Seite der mehreren Füße (24) das große Rad (2) vorgesehen ist, während auf ihrer anderen Seite der Rollstuhlaufbau (11) vorgesehen ist.

## Revendications

1. Chaise roulante pourvue de pieds, comprenant :
un corps de chaise roulante (11) ;
des grandes roues (2) supportées en pivotement par le corps de chaise roulante (11) via un essieu de grandes roues (12) ;
une pluralité de pieds (24) supportés en pivotement par les grandes roues (2) via des axes rotatifs (23) ;
un moyen de transmission de puissance (36) ; et
une manette rotative (41),
et une pluralité de poulies ou de roues dentées (33) supportées en pivotement par les axes rotatifs (23) avec les pieds (24) attachés à celles-ci ;
**caractérisé par**
une unique poulie ou roue dentée (31) supportée en pivotement par l'essieu de grandes roues (12) ; dans laquelle la chaise roulante est configurée de telle manière que le moyen de transmission de puissance (36) transmet une force d'entraînement depuis l'unique poulie ou roue dentée (31) supportée en pivotement par l'essieu de grandes roues (12) vers la pluralité de poulies ou de roues dentées (33) supportées en pivotement par les axes rotatifs (23) ;
la pluralité de poulies ou de roues dentées (33) supportées en pivotement par les axes rotatifs (23) sont reliées avec la poulie ou la roue dentée (31) supportée en pivotement par l'essieu de grandes roues (12) par le moyen de transmission de puissance (36) de telle façon que la pluralité de poulies ou de roues dentées (33) présentent le même changement angulaire que la poulie ou la roue dentée (31) supportée en pivotement par l'essieu de grandes roues (12) ; et
en ce que le changement angulaire de la poulie ou de la roue dentée (31) peut être commandé en faisant tourner la manette rotative (41) indépendamment de l'angle de rotation des grandes roues (2).

2. Chaise roulante pourvue de pieds selon la revendication 1, **caractérisée en ce que** la chaise roulante est configurée pour transmettre une force de rotation de la manette rotative (41) à l'unique poulie ou roue dentée (31) supportée en pivotement par les essieux de grandes roues (12) via une vis tangente (43).

3. Chaise roulante pourvue de pieds selon la revendication 1, **caractérisée en ce que** la chaise roulante est configurée pour transmettre une force de rotation de la manette rotative (41) à l'unique poulie ou roue dentée (31) supportée en pivotement par l'essieu de grandes roues (12) via un dispositif à engrenages planétaires (5).

4. Chaise roulante pourvue de pieds selon la revendication 3, **caractérisée en ce que** le dispositif à engrenages planétaires (5) comprend :
un pignon solaire (51) fixé à l'essieu de grandes roues (12) ;
des engrenages planétaires (52a), (52b), 52c) susceptibles d'être engagés avec la roue solaire (51) ;
un engrenage intérieur (53) susceptible d'être engagé avec les engrenages planétaires (52a), (52b), (52c) ;
des axes planétaires (54a), (54b), (54c) qui supportent en pivotement les engrenages planétaires (52a), (52b), (52c) ; et
un support d'engrenages planétaires (55) avec les axes de planétaires (54a), (54b), (54c) fixés sur celui-ci, et **en ce que**
la manette rotative (41) est intégralement fixée à l'engrenage intérieur (53) de manière à transférer un angle de rotation du support d'engrenages planétaires (55) directement à l'unique poulie ou roue dentée (31) supportée en pivotement par l'essieu de grandes roues (12).

5. Chaise roulante pourvue de pièces selon la revendication 1, **caractérisée en ce que** la chaise roulante comprend en outre des poulies ou des roues dentées (35) qui sont chacune supportée en pivotement par la grande roue (2) via des axes relais (32) pour transmettre une force d'entraînement, par le moyen de transmission de puissance (36),et (37), depuis l'unique poulie ou roue dentée (31) supportée en pivotement par l'essieu de grandes roues (12) vers la pluralité de poulies ou de roues dentées (33) supportées en pivotement par les axes rotatifs (23) via les poulies ou les roues dentées (35) et (34) supportées en pivotement par les axes relais (32) ; et **en ce qu'**un rayon extérieur de chacune des poulies ou roues dentées (33) qui sont chacune supportée par l'axe rotatif (23) est plus petit que celui de l'unique poulie ou roue dentée (31) supportée en pivotement par l'essieu de grandes roues (12).

6. Chaise roulante pourvue de pieds selon la revendication 1, **caractérisée en ce que** la chaise roulante est configurée de telle façon que la manette rotative permet la commande des changements angulaires des uniques poulies ou roues dentées (31) interverrouillées qui sont supportées en pivotement par les essieux de grandes roues à gauche et à droite.

7. Chaise roulante pourvue de pieds selon la revendication 1, **caractérisée en ce que** la chaise roulante comprend en outre des roulettes orientables (14) et des chemises (15) prévues sur le côté droit et le côté gauche d'une partie au fond du corps de chaise roulante, les chemises (15) étant en pente vers le bas dans la direction depuis l'essieu de grandes roues (12) vers les roulettes (14).

8. Chaise roulante pourvue de pieds selon la revendication 1, **caractérisée en ce que** la grande roue (2) est prévue sur un côté de la pluralité de pieds (24) alors que le corps de chaise roulante (11) est prévu sur l'autre côté de ceux-ci.
